# EUROPEAN PATENT APPLICATION

(11) **EP 2 562 011 A1**
(43) Date of publication of application: **27.02.2013**
(21) Application number: 12180973.5
(22) Date of filing: 20.08.2012
(51) Int. Cl.: B60C 23/04, H04L 9/22

(54) **Tire pressure monitoring redundant communication method and system**

(30) Priority: 23.08.2011 JP 2011181530
(71) Applicant: KABUSHIKI KAISHA TOKAI RIKA DENKI SEISAKUSHO, Niwa-gun, Aichi 480-0195 (JP)
(72) Inventor: Kosugi, Masanori, Niwa-gun,, Aichi 480-0195 (JP)
(74) Representative: TBK

(57) **Abstract**

A communication method transmits a detection signal including a valve ID and detection information, receives the detection signal, performs error detection on the valve ID and detection information, and uses the valve ID and detection information when there is no error. The communication method generates (S2) third data corresponding to the detection information in accordance with a predetermined rule to increase redundancy of the detection information, generates (S2) computed data by performing an exclusive disjunction logic operation with the valve ID and third data, transmits (S4) the detection signal that includes the computed data and detection information, receives (S5) the detection signal, retrieves (S7) the third data corresponding to the detection information from the detection information, restores (S7) the valve ID by performing an exclusive disjunction logical operation with the computed data and the third data, and determines (S8) whether a restored valve ID conforms to a stored first data.

## Description

The present invention relates to a communication method and system and, more particularly, to a transmitter, a receiver, and a tire pressure monitoring system that can increase the integrity of transmitted information.

A vehicle may be provided with a tire pressure monitoring system (TPMS) that monitors the tire air pressure. When the vehicle is traveling, the tire pressure monitoring system monitors the tires for air pressure and temperature abnormalities by performing wireless communication with a tire valve, which is arranged on each tire and obtains the air pressure and temperature of the tire.

Each tire valve of the tire pressure monitoring system transmits a wireless signal including detection information, such as the air pressure and the temperature, and an ID code, which is checked by the vehicle. An error detection code is added to the wireless signal for bit error detection (refer to, for example, Japanese Laid-Open Patent Publication No. 2006-306202).

A wireless signal provided with the error detection code may include a large number of bit errors. Under an adverse communication environment in such a situation, the error detection code may erroneously be determined as being normal for one reason or another. To avoid such an erroneous determination, in a wireless signal, redundant information is added to the payload of the data string in addition to the error detection code. More specifically, plural pieces of identical detection information are included in a wireless signal as the redundant information. After receiving the wireless signal, the vehicle checks for errors using the error detection code. Further, the vehicle determines that there are no errors when the plural pieces of detection information are identical.

When increasing the redundant information in the wireless signal to increase redundancy, the data string of the wireless signal is elongated. This increases the amount of the transmission data. It is desirable that such increase in the amount of transmission data be suppressed, while increasing the integrity of the transmitted information. This is not limited to a tire pressure monitoring system and also applies to any system that performs wireless communication.

Accordingly, it is an object of the present invention to provide a communication method, communication system, transmitter, receiver, and tire pressure monitoring system that suppress an increase in the amount of transmission data, while increasing the integrity of the transmitted information.

One aspect of the present invention is a communication method using first data, which is a fixed data string and stored in advance, and second data, which is a variable data string. The communication method includes generating third data that corresponds to the second data in accordance with a predetermined rule to increase redundancy of the second data, generating exclusive disjunction data by performing an exclusive disjunction logic operation with the first data and the third data, transmitting a wireless signal including the exclusive disjunction data and the second data, receiving the wireless signal, retrieving the third data, which corresponds to the second data, from the second data in the received wireless signal, restoring the first data by performing an exclusive disjunction logical operation with the exclusive disjunction data in the received wireless signal and the third data, and determining whether or not the first data that is stored in advance conforms to the restored first data.

A second aspect of the present invention is a communication system using first data, which is a fixed data string and stored in advance, and second data, which is a variable data string. The communication system includes a transmitter that transmits a wireless signal and a receiver that receives the wireless signal from the transmitter. The transmitter is configured to generate third data that corresponds to the second data in accordance with a predetermined rule to increase redundancy of the second data, generate exclusive disjunction data by performing an exclusive disjunction logic operation with the first data and the third data, and transmit a wireless signal including the exclusive disjunction data and the second data. The receiver is configured to receive the wireless signal, retrieve the third data, which corresponds to the second data, from the second data in the received wireless signal, restore the first data by performing an exclusive disjunction logical operation with the exclusive disjunction data in the received wireless signal and the third data, and determine whether or not the first data that is stored in advance conforms to the restored first data.

A third aspect of the present invention is a transmitter that performs communication using first data, which is a fixed data string, and second data, which is a variable data string. The transmitter includes a control unit configured to generate third data that corresponds to the second data in accordance with a predetermined rule to increase redundancy of the second data, generate exclusive disjunction data by performing an exclusive disjunction logic operation with the first data and the third data, and generate a wireless signal including the exclusive disjunction data and the second data. A transmitter is connected to the control unit. The transmitter transmits the wireless signal.

A fourth aspect of the present invention is a receiver that performs communication using first data, which is a fixed data string and stored in advance, and second data, which is a variable data string. The receiver includes a receiver unit that receives a wireless signal including the second data and exclusive disjunction data, which is generated by performing an exclusive disjunction logic operation with the first data and third data. The third data corresponds to the second data and is generated in accordance with a predetermined rule to increase redundancy of the second data. A controller is connected to the receiver unit. The controller is configured to retrieve the third data, which corresponds to the second data, from the second data in the received wireless signal, restore the first data by performing an exclusive disjunction logical operation with the exclusive disjunction data in the received wireless signal and the third data, and determine whether or not the first data that is stored in advance conforms to the restored first data.

A fifth aspect of the present invention is a tire pressure monitoring system including the communication system of the second aspect of the present invention. The transmitter is a tire valve, the receiver is arranged in a vehicle, the first data is a unique valve ID of the tire valve, and the second data is detection information obtained by the tire valve.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram of a tire pressure monitoring system according to one embodiment of the present invention;
Fig. 2A is a diagram showing the data required for transmission in the tire pressure monitoring system of Fig. 1;
Fig. 2B is a diagram showing the data used for computation during transmission in the tire pressure monitoring system of Fig. 1;
Fig. 2C is a diagram showing computed data during transmission in the tire pressure monitoring system of Fig. 1;
Fig. 3A is a diagram showing received data in the tire pressure monitoring system of Fig. 1;
Fig. 3B is a diagram showing the data used for computation of the received data in the tire pressure monitoring system of Fig. 1;
Fig. 3C is a diagram showing a computation result of the received data in the tire pressure monitoring system of Fig. 1; and
Fig. 4 is a sequence chart showing communication performed by the tire pressure monitoring system of Fig. 1.

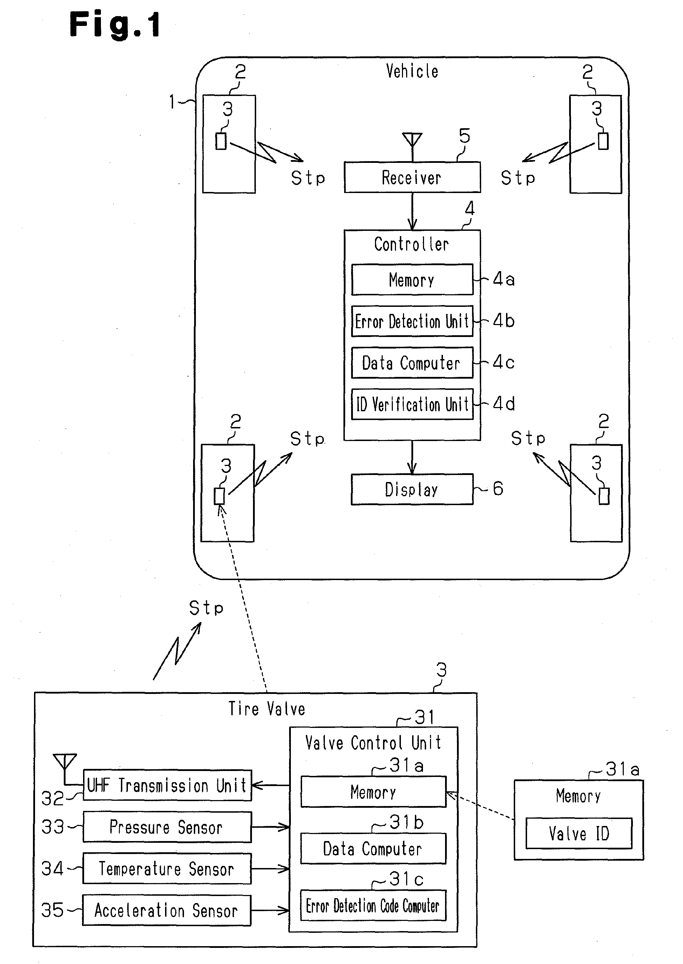

A tire pressure monitoring system (TPMS) for a vehicle according to one embodiment of the present invention will now be described with reference to Figs. 1 to 4. The tire pressure monitoring system monitors the tires of the vehicle to check for abnormalities in the air pressure and temperature by detecting the air pressure and temperature of the tires.

As shown in Fig. 1, a vehicle 1 includes four tires 2. Each tire 2 includes a tire valve 3, which serves as an air inlet. The tire valve 3 detects the air pressure and temperature of the corresponding tire 2 and transmits a wireless signal. Further, the tire valve 3 includes a valve control unit 31 that controls the operation of the tire valve 3. The valve control unit 31 is connected to a UHF transmission unit 32 that transmits a detection signal Stp, which includes the air pressure and temperature of the corresponding tire 2, on a radio wave in an ultrahigh frequency (UHF) band. The valve control unit 31 includes a memory 31 a, which stores valve IDs.

The tire valve 3 also includes a pressure sensor 33, which detects the air pressure of the corresponding tire 2, a temperature sensor 34, which detects the temperature of the corresponding tire 2, and an acceleration sensor 35, which detects the acceleration applied to the corresponding tire 2. The sensors 33 to 35 provide detection signals to the valve control unit 31. The detection signal Stp transmitted by the UHF transmission unit 32 includes the air pressure, temperature, and unique ID (valve ID) of the corresponding tire 2. The UHF transmission unit 32 of each tire valve 3 transmits the detection signal Stp when the corresponding acceleration sensor 35 detects acceleration.

A controller 4, which controls the tire pressure monitoring system, is arranged on a vehicle body of the vehicle 1. The controller 4 is connected to a receiver 5 (receiver unit) that receives the detection signal Stp on the UHF band radio wave transmitted from each tire valve 3 and including the air pressure and temperature of the corresponding tire 2. The controller 4 is also connected to a display 6, which allows for a driver to visually check the air pressure and temperature of the tires 2. The display 6 is arranged in the vehicle 1 near the driver seat.

When the receiver 5 receives a detection signal Stp, the receiver 5 provides the controller 4 with received data that includes a valve ID and detection information. The controller 4 includes an ID verification unit 4d that verifies the valve ID. The ID verification unit 4d performs ID verification to determine whether or not the valve ID in the detection signal Stp conforms to a valve ID stored in a memory 4a. When the two IDs are in conformation, the ID verification unit recognizes the detection signal Stp as one from a tire 2 registered to the vehicle 1.

The controller 4 reads the air pressure and temperature of the tire 2 from the detection signal Stp and displays the air pressure and temperature of the tire 2 on the display 6. When there is an abnormality in the air pressure or temperature of the tire 2, the controller 4 indicates such a situation on the display 6 or issues a warning. Such operation is repetitively performed whenever the receiver 5 receives a detection signal Stp from a tire valve 3.

The tire pressure monitoring system of the present embodiment employs a communication method that increases the redundancy without increasing the data length. In the tire pressure monitoring system, the valve ID is a fixed data string, and the detection information including the air pressure and temperature is a variable data string. Thus, the valve ID is the same each time the detection signal Stp is received, and the detection information may differ each time the detection signal Stp is received. The valve ID corresponds to first data, which is a fixed data string, and the detection information corresponds to second data, which is a variable data string.

The valve control unit 31 of the tire valve 3 includes a data computer 31 b, which computes transmission data, and an error detection code computer 31c, which computes an error detection code. The data computer 31 b generates exclusive disjunction data (hereinafter referred to as the computed data) by performing an exclusive disjunction logical operation using the valve ID and duplicated data of the detection information. Then, the data computer 31 b generates transmission data that includes the computed data and the detection information. The error detection code computer 31c computes an error detection code from the transmission data generated by the data computer 31b. In the present embodiment, a cyclic redundancy check (CRC) code is used as the error detection code. The CRC code can be used to detect a change in part of the data that occurs during transmission. The data computer 31b duplicates the detection information in accordance with a predetermined rule to generate the duplicated data. The duplicated data corresponds to third data, which conforms to the detection information corresponding to the second data.

The controller 4 of the vehicle 1 includes an error detection unit 4b, a data computer 4c, and the ID verification unit 4d. The error detection unit 4b detects an error in the received data using the error detection code. The data computer 4c restores the original data from the received data. The ID verification unit 4d determines whether or not the restored valve ID conforms to a valve ID stored in the memory 4a.

The error detection unit 4b performs error detection by computing an error detection code from the payload of the received data and determining whether or not the computed error detection code conforms to the error detection code included in the received data. When the error detection unit 4b determines that the received data does not include an error, the data computer 4c restores the valve ID by performing an exclusive disjunction logical operation again using the computed data, which was generated by performing the exclusive disjunction logical operation with the valve ID (first data) and the duplicated data (third data) of the detection information. The data used with the computed data for the exclusive disjunction logical operation is the data (second data) prior to the process performed in accordance with the predetermined rule. Thus, a process for returning the third data to the second data is performed to generate the original second data. Here, the third data is obtained by duplicating the second data in accordance with the predetermined rule. Thus, the third data can be directly used with the computed data in the exclusive disjunction logical operation. In this manner, the data computer 4c restores the valve ID by performing the exclusive disjunction logical operation with the computed data and the duplicated data. When the restored valve ID conforms to a valve ID stored in the memory 4a, the valve ID verification unit 4d determines that valve ID verification has been accomplished.

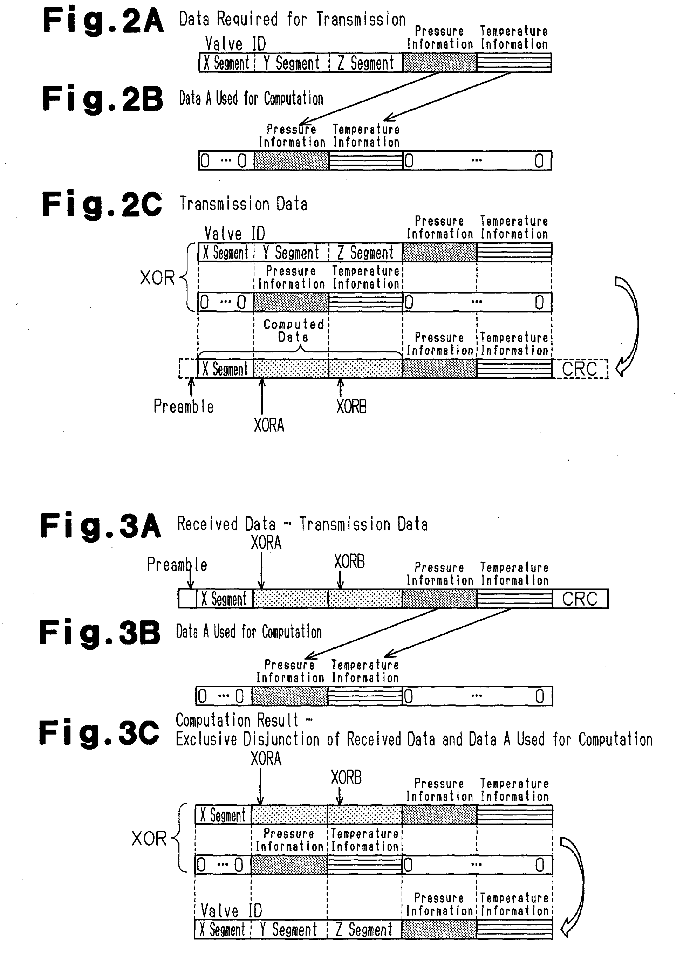

The communication method of the tire pressure monitoring system will now be described in detail with reference to Figs. 2 and 3.

Referring to Fig. 2A, in each valve control unit 31, the data computer 31b reads the valve ID from the memory 31a, acquires pressure information obtained by the pressure sensor 33 and temperature information obtained by the temperature sensor 34, and generates data required for transmission. The data required for transmission includes the valve ID, the pressure information, and the temperature information. The valve ID is divided into three segments, namely, an X segment, a Y segment, and a Z segment. The X segment is arranged at the head of the valve ID and used with 0 in an exclusive disjunction logical operation. The Y segment is used with the pressure information in an exclusive disjunction logical operation. The Z segment is used with the temperature information in an exclusive disjunction logical operation. The pressure information and the temperature information correspond to detection information.

Referring to Fig. 2B, to make the detection information redundant, the data computer 31 b duplicates the pressure information and the temperature information to generate data A, which is used for a computation. In the data A, the pressure information and the temperature information are respectively arranged at locations corresponding to the Y segment and Z segment in the valve ID of the data required for transmission. The data A used for computation is a data string in which 0 is set for each bit in the location corresponding to the X segment of the valve ID, the pressure information is arranged at the location corresponding to the Y segment of the valve ID, and the temperature information is arranged at the location corresponding to the Z segment of the valve ID.

Referring to Fig. 2C, the data computer 31 b performs an exclusive disjunction (XOR) logical operation with the data required for transmission and the data A used for a computation to generate computed data, which serves as exclusive disjunction data. More specifically, the data computer 31 b computes an exclusive disjunction value XORA of the Y segment of the valve ID and the pressure information. The data computer 31b also computes an exclusive disjunction value XORB of the Z segment of the valve ID and the temperature information. An exclusive disjunction logical operation that uses 0 does not change the X segment of the valve ID. The computed data includes the X segment of the valve ID, the exclusive disjunction value XORA, and the exclusive disjunction value XORB. The pressure information and the temperature information are added to the computed data to form the payload of the detection signal Stp.

The error detection code computer 31c computes a CRC code, which serves as an error detection code, from the payload generated by the data computer 31 b. The valve control unit 31 adds a preamble to the head of the payload and adds the CRC code to the end of the payload to generate transmission data. Then, the valve control unit 31 transmits a detection signal Stp, which includes the transmission data, from the UHF transmission unit 32.

Referring to Fig. 3A, the controller 4 of the vehicle 1 retrieves received data from the detection signal Stp, which is received by the receiver 5. The received data should be identical to the transmission data as long as there are no bit errors. The error detection unit 4b first performs error detection with the CRC on the payload of the received data excluding the preamble to check for bit errors.

Referring to Fig. 3B, the data computer 4c retrieves the pressure information and the temperature information from the received data and generates data A, in which the pressure information and the temperature information are respectively arranged at locations corresponding to the Y segment and Z segment of the valve ID. Here, a process is performed to obtain the original data from the pressure information and temperature information retrieved from the received data. Then, the original data is used. In the present embodiment, the pressure information and the temperature information are duplicated in accordance with a predetermined rule. Thus, the pressure information and temperature information retrieved from the received data can be directly used to generate the data A.

Referring to Fig. 3C, the data computer 4c performs an exclusive disjunction (XOR) logical operation with the payload, excluding the preamble and the CRC code, and the data A used for computation to obtain a computation result. More specifically, the data computer 4c performs an exclusive disjunction logical operation with the exclusive disjunction value XORA and the pressure information to restore the Y segment of the valve ID. Further, the data computer 4c performs an exclusive disjunction logical operation with the exclusive disjunction value XORB and the temperature information to restore the Z segment of the valve ID. In this manner, the data computer 4c obtains a computation result that includes the valve ID, the pressure information, and the temperature information.

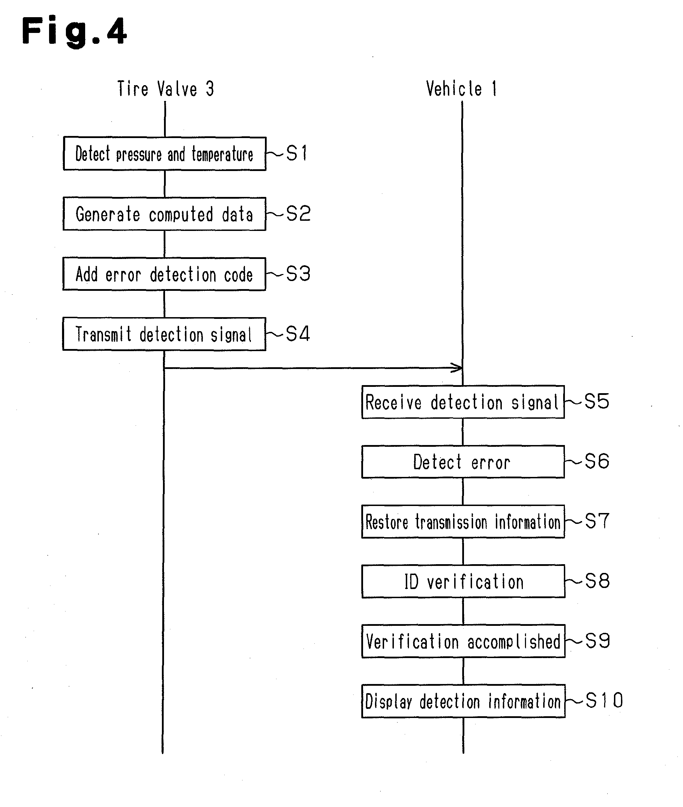

The procedures for communication in the tire pressure monitoring system will now be described with reference to Fig. 4. In steps S1 to S10, the tire valve 3 transmits a detection signal Stp including detection information to the vehicle 1, and the vehicle 1 receives the detection signal Stp and displays the detection information.

As shown in Fig. 4, the tire valve 3 detects the pressure and temperature (step S1). More specifically, in the tire valve 3, when the acceleration sensor 35 detects acceleration, the pressure sensor 33 provides pressure information to the valve control unit 31, and the temperature sensor 34 provides temperature information to the valve control unit 31.

When the pressure and temperature are detected, the tire valve 3 generates computed data (step S2). More specifically, to obtain redundancy, the data computer 31b duplicates the pressure information and the temperature information and generates computed data by performing an exclusive disjunction (XOR) logical operation with the valve ID and the data string including the duplicated pressure information and temperature information. Then, the data computer 31 b generates a payload including the computed data, pressure information, and temperature information.

The tire valve 3 adds an error detection code to the payload (step S3). More specifically, the error detection code computer 31c computes a CRC code of an error detection code from the payload and adds the CRC code to the payload. Further, the valve control unit 31 adds a preamble to the head of the payload to generate transmission data.

Then, the tire valve 3 transmits the detection signal Stp (step S4). More specifically, the valve control unit 31 transmits a detection signal Stp including the generated transmission data from the UHF transmission unit 32.

The vehicle 1 receives the detection signal Stp from the tire valve 3 (step S5). More specifically, the controller 4 retrieves received data from the detection signal Stp, which is received by the receiver 5.

The vehicle 1 performs error detection on the received data (step S6). More specifically, the error detection unit 4b performs error detection with the CRC on the payload of the received data excluding the preamble to check for bit errors. When determining that there is no error, the error detection unit 4b continues computation with the received data.

The vehicle 1 restores the transmission information from the received data (step S7). More specifically, the data computer 4c retrieves the pressure information and the temperature information from the received data and generates the data A used for computation from the pressure information and the temperature information. Further, the data computer 4c performs an exclusive disjunction logical operation with the exclusive disjunction value XORA and the pressure information and an exclusive disjunction logical operation with the exclusive disjunction XORB and the temperature information to restore the valve ID. In this manner, the data computer 4c obtains a computation result including the valve ID, the pressure information, and the temperature information.

The vehicle 1 performs ID verification with the restored valve ID (step S8). More specifically, the ID verification unit 4d determines whether or not the restored valve ID conforms to a valve ID stored on the memory 4a. When ID verification is accomplished (step S9), the controller 4 recognizes that the detection signal Stp is from a tire 2 registered to the vehicle 1. Thus, the ID verification unit 4d determines that the received data does not include an error and employs the valve ID, the pressure information, and the temperature information.

When ID verification is accomplished, the vehicle 1 displays the detection information on the display 6 (step S10). More specifically, the controller 4 displays the air pressure and temperature of the corresponding tire 2 on the display 6. When there is an abnormality in the air pressure or temperature of the tire 2, the controller 4 indicates such a situation on the display 6 or issues a warning.

In the tire pressure monitoring system of the present embodiment, the detection information of the detection signal Stp transmitted from the tire valve 3 to the vehicle 1 is made redundant without increasing the data length. More specifically, the tire valve 3 duplicates the detection information to obtain redundancy and performs an exclusive disjunction logical operation with the duplicated data and the valve ID to include the duplicated data in the valve ID. Thus, the tire pressure monitoring system of the present embodiment prevents the data length from being elongated by an amount corresponding to the duplicated data of the detection information.

Further, the vehicle 1 performs an exclusive disjunction logical operation on the received data with the detection information and the exclusive disjunction value of the duplicated data and valve ID to restore the valve ID and check for errors in the detection information. Thus, the valve ID can be restored from the received data, which is redundant but not increased in length. At the same time, errors in the detection information can be detected. Thus, the integrity of the detection information can be increased without increasing the transmission data.

The tire pressure monitoring system of the above embodiment has the advantages described below.
(1) The valve control unit 31 performs an exclusive disjunction logical operation with the valve ID and the detection information, which is duplicated to make the detection information redundant, to generate exclusive disjunction data including the detection information duplicated on the data string of the valve ID. Thus, the payload of the transmission data has the same length as the data string including the valve ID and the detection information. In the prior art, the payload of the transmission data is formed by a data string including the valve ID and two pieces of the detection information. In the present embodiment, the duplicated redundant data increases redundancy while decreasing the length of the transmission data by an amount corresponding to one piece of the detection information. Thus, the integrity of the detection information can be increased without increasing the transmission data.

Further, the controller 4 performs an exclusive disjunction logical operation with the received exclusive disjunction values XORA and XORB and the detection information to restore the valve ID. When the restored valve ID conforms to a stored valve ID, the controller 4 determines that the received error does not include an error and employs the received data of the received detection signal Stp. When a stored valve ID conforms to the valve ID obtained by eliminating the duplicated detection information included in the exclusive disjunction values XORA and XORB, this indicates that the received data does not include an error. In this manner, it can be determined that the received data does not include errors at the same time as when the valve ID is restored.
(2) The detection signal Stp includes a CRC code for error detection obtained from the data string of the exclusive disjunction values XORA and XORB and the detection information. Thus, error detection can be performed with the CRC before restoring the valve ID. When an error is detected, the valve ID will not be restored. This simplifies the receiving process. Further, when a data string including a bit error is received, the error detection code obtained from the received data may erroneously conform to the error detection code in the received data for one reason or another. Nevertheless, the duplicated detection information will not conform to the original detection information. Thus, an error can be detected.
(3) In the system of the present embodiment, the data length is not increased. Thus, less power is consumed during transmission of the detection signal Stp. This reduces power consumption in the tire valve 3 that is driven by a battery.

It should be apparent to those skilled in the art that the present invention may be embodied in many other specific forms without departing from the spirit or scope of the invention. Particularly, it should be understood that the present invention may be embodied in the following forms.

In the above embodiment, the detection information may be set at any location in the data string of the valve ID when performing an exclusive disjunction logical operation with the valve ID and the detection information as long as the same location is used by the valve control unit of the tire valve and the controller of the vehicle.

In the above embodiment, the pressure information and the temperature information are included as detection information in the detection signal Stp. However, there is no such limitation, and information for monitoring the tire pressure and issuing a warning may be included as detection information in the detection signal Stp. For example, the detection signal Stp may include status information indicating a sudden pressure decrease as the detection information. Further, the detection signal Stp may include only the pressure information as the detection information.

In the above embodiment, the data A used for computation is generated with the same data length as the data required for transmission in which the valve ID and the detection information are continuous. However, the transmission data may be configured so that the exclusive disjunction data and detection information are continuous after exclusive disjunction logical operation of the valve ID and the duplicated detection information.

In the above embodiment, the valve ID is used as the first data. However, an initial set value, which is fixed during normal use, may be employed as the first data. More specifically, the computed data may be generated through an exclusive disjunction logical operation performed with the initial setting value and the detection information. Further, the valve ID and the initial setting value may be used as the first data.

In the above embodiment, the detection information, which serves as the second data, is duplicated, and the duplicated data, which corresponds to the second data, is used as the third data. However, a computation may be performed on the second data in accordance with a predetermined rule to obtain data, which is used as the third data. For example, data obtained by inverting every bit of the second data, data obtained by adding a given number to the second data, or data obtained by inverting only a lowermost rank bit of the second data may be used as the third data.

In the above embodiment, the detection signal Stp may be encoded. For example, after adding the error detection code to the detection signal Stp (step S3), the detection signal Stp may be encoded, and the encoded detection signal Stp may be transmitted to the vehicle 1 (step S4). In this case, after the encoded detection signal Stp is received (step S5), the vehicle 1 decodes the encoded detection signal Stp.

In the above embodiment, error detection is performed with a CRC. Instead, other error detections codes, such as a parity bit, may be used.

In the above embodiment, the communication method according to the present invention is applied to the tire pressure monitoring system but may be applied to a communication system that transmits a wireless signal including information requiring redundancy.

The present examples and embodiments are to be considered as illustrative and not restrictive.

A communication method transmits a detection signal including a valve ID and detection information, receives the detection signal, performs error detection on the valve ID and detection information, and uses the valve ID and detection information when there is no error. The communication method generates (S2) third data corresponding to the detection information in accordance with a predetermined rule to increase redundancy of the detection information, generates (S2) computed data by performing an exclusive disjunction logic operation with the valve ID and third data, transmits (S4) the detection signal that includes the computed data and detection information, receives (S5) the detection signal, retrieves (S7) the third data corresponding to the detection information from the detection information, restores (S7) the valve ID by performing an exclusive disjunction logical operation with the computed data and the third data, and determines (S8) whether a restored valve ID conforms to a stored first data.

## Claims

1. A communication method using first data, which is a fixed data string and stored in advance, and second data, which is a variable data string, the communication method **characterized by**:
generating third data that corresponds to the second data in accordance with a predetermined rule to increase redundancy of the second data;
generating exclusive disjunction data by performing an exclusive disjunction logic operation with the first data and the third data;
transmitting a wireless signal including the exclusive disjunction data and the second data;
receiving the wireless signal;
retrieving the third data, which corresponds to the second data, from the second data in the received wireless signal;
restoring the first data by performing an exclusive disjunction logical operation with the exclusive disjunction data in the received wireless signal and the third data; and
determining whether or not the first data that is stored in advance conforms to the restored first data.

2. The communication method according to claim 1, **characterized by**:
after generating the exclusive disjunction data, computing an error detection code from a data string of the exclusive disjunction data and the second data,
wherein the transmitting a wireless signal includes transmitting the wireless signal including the exclusive disjunction data, the second data, and the error detection code, and
the method further includes
detecting an error in the received wireless signal using the error detection code included in the received wireless signal.

3. A communication system using first data, which is a fixed data string and stored in advance, and second data, which is a variable data string, the communication system **characterized by**:
a transmitter that transmits a wireless signal; and
a receiver that receives the wireless signal from the transmitter;
wherein the transmitter is configured to
generate third data that corresponds to the second data in accordance with a predetermined rule to increase redundancy of the second data,
generate exclusive disjunction data by performing an exclusive disjunction logic operation with the first data and the third data, and
transmit a wireless signal including the exclusive disjunction data and the second data; and
the receiver is configured to
receive the wireless signal,
retrieve the third data, which corresponds to the second data, from the second data in the received wireless signal,
restore the first data by performing an exclusive disjunction logical operation with the exclusive disjunction data in the received wireless signal and the third data, and
determine whether or not the first data that is stored in advance conforms to the restored first data.

4. The communication system according to claim 3, **characterized in that**:
the transmitter is configured to
compute an error detection code from a data string of the exclusive disjunction data and the second data after generating the exclusive disjunction data, and
transmit the wireless signal including the exclusive disjunction data, the second data, and the error detection code; and
the receiver is configured to detect an error in the received wireless signal using the error detection code included in the received wireless signal.

5. A transmitter that performs communication using first data, which is a fixed data string, and second data, which is a variable data string, the transmitter **characterized by**:
a control unit configured to generate third data that corresponds to the second data in accordance with a predetermined rule to increase redundancy of the second data, generate exclusive disjunction data by performing an exclusive disjunction logic operation with the first data and the third data, and generate a wireless signal including the exclusive disjunction data and the second data; and
a transmitter connected to the control unit, wherein the transmitter transmits the wireless signal.

6. The transmitter according to claim 5, **characterized in that**:
the control unit is configured to compute an error detection code from a data string of the exclusive disjunction data and the second data after generating the exclusive disjunction data, and
the transmitter is configured to transmit the wireless signal including the exclusive disjunction data, the second data, and the error detection code.

7. A receiver that performs communication using first data, which is a fixed data string and stored in advance, and second data, which is a variable data string, the receiver **characterized by**:
a receiver unit that receives a wireless signal including the second data and exclusive disjunction data, which is generated by performing an exclusive disjunction logic operation with the first data and third data, wherein the third data corresponds to the second data and is generated in accordance with a predetermined rule to increase redundancy of the second data; and
a controller connected to the receiver unit, wherein the controller is configured to retrieve the third data, which corresponds to the second data, from the second data in the received wireless signal, restore the first data by performing an exclusive disjunction logical operation with the exclusive disjunction data in the received wireless signal and the third data, and determine whether or not the first data that is stored in advance conforms to the restored first data.

8. The receiver according to claim 7, **characterized in that** the controller is configured to detect an error in the received wireless signal using the error detection code included in the received wireless signal.

9. A tire pressure monitoring system **characterized by**:
the communication system according to claim 3 or 4, wherein
the transmitter is a tire valve,
the receiver is arranged in a vehicle,
the first data is a unique valve ID of the tire valve, and
the second data is detection information obtained by the tire valve.
